# EUROPEAN PATENT SPECIFICATION

(11) **EP 1 791 367 B1**
(45) Date of publication and mention of the grant of the patent: **14.12.2011**
(21) Application number: 05775173.7
(22) Date of filing: 29.08.2005
(51) Int. Cl.: H04N 7/24, G11B 20/12

(54) **INFORMATION RECORDING MEDIUM, MULTIPLEXER, AND DECODER**
INFORMATIONSAUFZEICHNUNGSMEDIUM, MULTIPLEXER UND DEKODIERER
SUPPORT D'ENREGISTREMENT D'INFORMATIONS, MULTIPLEXEUR ET DÉCODEUR

(30) Priority: 31.08.2004 JP 2004251869
(43) Date of publication of application: 30.05.2007
(73) Proprietor: Panasonic Corporation, Kadoma-shi Osaka 571-8501 (JP)
(72) Inventor: MATSUI, Yoshinori c/o Matsushita El. Ind. Co., Ltd., Chuo-ku, Osaka-shi, Osaka 540-6319 (JP); KONDO, Satoshi c/o Matsushita El. Ind. Co., Ltd., Chuo-ku, Osaka-shi, Osaka 540-6319 (JP); OKADA, Tomoyuki c/o Matsushita El. Ind. Co., Ltd., Chuo-ku, Osaka-shi, Osaka 540-6319 (JP); IKEDA, Wataru c/o Matsushita El. Ind. Co., Ltd., Chuo-ku, Osaka-shi, Osaka 540-6319 (JP); YAHATA, Hiroshi c/o Matsushita El. Ind. Co., Ltd., Chuo-ku, Osaka-shi, Osaka 540-6319 (JP); TOMA, Tadamasa c/o Matsushita El. Ind. Co., Ltd., Chuo-ku, Osaka-shi, Osaka 540-6319 (JP)
(74) Representative: Eisenführ, Speiser & Partner
(86) International application number: PCT/JP2005/015677
(87) International publication number: WO 2006/025338

(56) References cited:
- EP-A- 0 893 926
- JP-A- 07 201 138
- JP-A- 2000 504 181
- JP-A- 2002 149 457
- JP-A- 2003 333 489
- JP-A- 2004 135 170
- US-A1- 2005 108 757
- ISO/IEC CD13818-1 (MPEG 2 PART 1) - INTERNATIONAL ORGANIZATION FOR STANDARDIZATION: "PROGRAM SPECIFIC INFORMATION, ANNEX C, ANNEX F, ANNEX H" INFORMATION TECHNOLOGY - GENERIC CODING OF MOVING PICTURES AND ASSOCIATED AUDIO INFORMATION. PART 1: SYSTEMS. DRAFT INTERNATIONAL STANDARD ISO/IEC DIS 13818-1, GENEVA, ISO, CH, 1 January 1994 (1994-01-01), page 36-45, WITH ANNEXES C, F, H, XP002498323
- ETSI En 300 468 v.1.5.1 (2003-5) Digital Video Broadcasting (DVB); Specification for Service Information (SI) in DVB systems pages 26 to 69 XP002998840
- ITU-T White Book Audio Visual/Multimedia Kanren (H Series) Kankokushu, Zaidan Hojin Shinnipon ITU Kyokai, Heisei 7 Nen 2 Gatsu 18 Nichi, pages 134 to 150 XP002998841

## Description

### Technical Field

The present invention relates to: a package medium (an information recording medium) in which data generated by packet-multiplexing video data and table data with side information of the video data is recorded; and a multiplexer and a decoder for the data.

### Background Art

The following describes, as a conventional technology, a transport stream (hereinafter, referred to also as "TS") by Moving Picture Experts Group (MPEG).

### (Data Structure of TS)

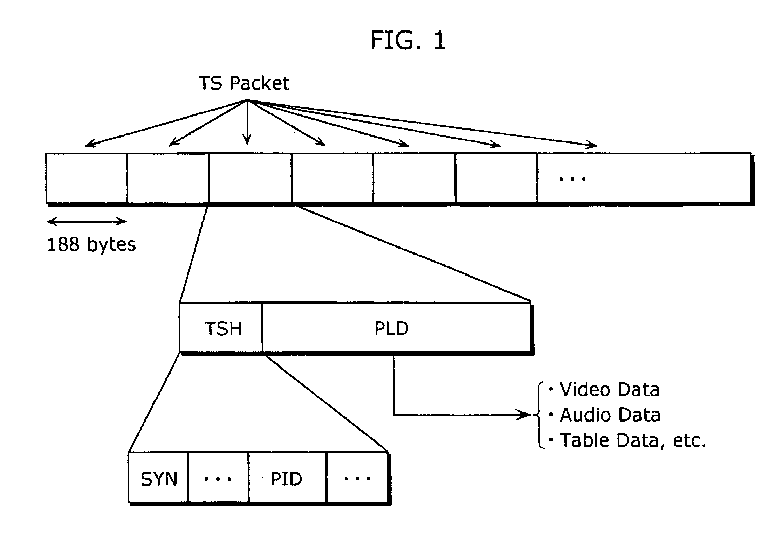

FIG.1 is a diagram showing a data structure of a TS.

A TS is a sequence of TS packets each of which has 188 bytes. Note that, if the TS is to be recorded on a storage medium, such as a video tape, a hard disk, or a blue-ray disk, a header of 4 bytes is generally added to at the beginning of each TS packet.

Each TS packet includes a TS header (hereinafter, referred to also as "TSH") and a TS payload (hereinafter, referred to also as "PLD"). The TSH has: a synchronizing word (SYN) representing the beginning of the packet; a packet identifier (PID) representing a type of the packet; and the like. In the PLD, substantial data is stored. Examples of the substantial data are coded data such as coded video and audio data, table data called a program map table, and the like. The PID is used to identify which data is stored in the TS packet, among the video, audio, table, or other data. A PID value of video or audio data is indicated in the table data.

### (Data Structure of Program Map Table)

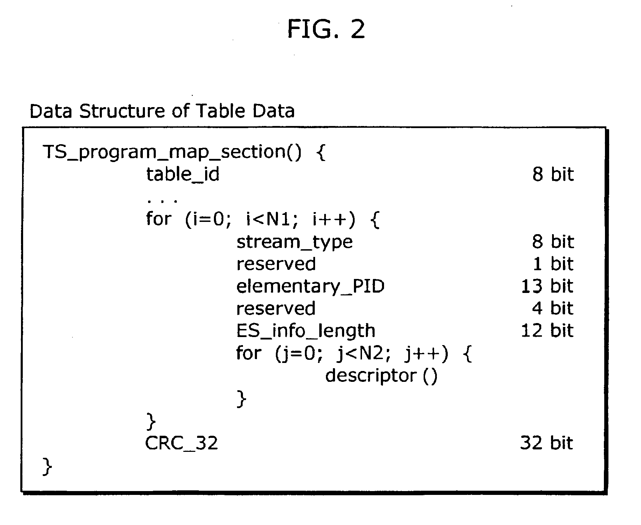

FIG.2 is a diagram showing a part of a syntax of the program map table.

"stream_type" shown in FIG. 2 is a field for specifying a coding method applied to the video or audio data. According to this field, it can be determined whether the data is video data or audio data, and if the data is video data, it can be determined by which standard coding method the video data is coded.

"reserved" is a field which is reserved for future extended use by the MPEG.

"elementary_PID" is a field representing a PID value of a TS packet in which the data whose coding method is represented by the "stream_type" is stored.

"ES_info_length" field represents a total number of bytes of a descriptor in a "for" loop following the "ES_info_length". In the "for" loop, N descriptors are stored.

### (Data Structure of Descriptor)

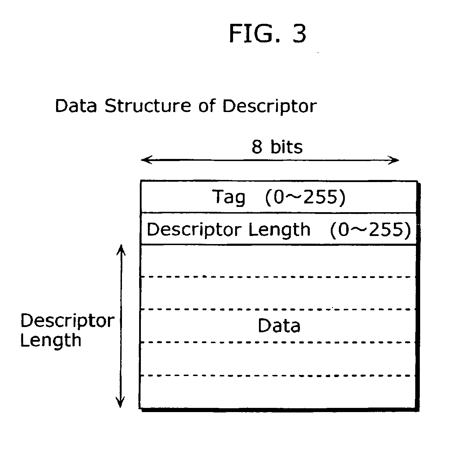

FIG.3 is a diagram showing a data structure of a descriptor.

A descriptor has: a tag representing a type of the descriptor; a descriptor length representing a total number of bytes of data of the descriptor; and data having the descriptor length.

The tag has 8 bits, so that up to 255 descriptor types can be defined.

The descriptor length has 8 bits, so that data of up to 255 bytes can be stored.

In the data of the descriptor, stored are: a content of coded video or audio data whose coding method is represented by the "stream_type"; information regarding multiplexing setting data; and the like, for example.

Detail of the descriptors, and types of the descriptors to be used, are decided by standards or service operation standards, which are defined by the MPEG, Society of Motion Picture and Television Engineers (SMPTE, a group defining video and audio methods in the United States), Advanced Television Systems Committee (ATSC, a committee defining digital television broadcasting methods in the United States), Blue-ray Disc Foundation (BDF, a group defining Blue-ray disk standards), and the like.

### (Multiplexer)

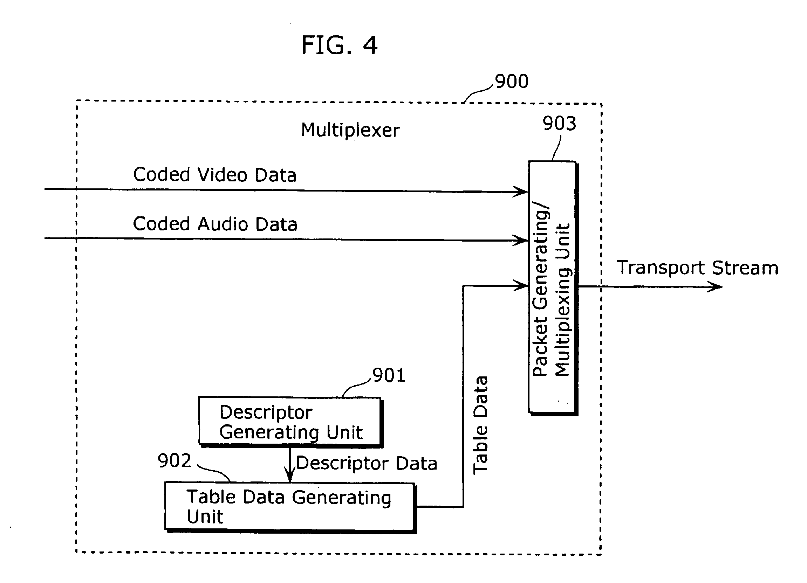

FIG. 4 is a block diagram showing an example of a structure of a conventional multiplexer which generates a TS having the above-described data structure from coded video and audio data.

As shown in FIG. 4, the conventional multiplexer 900 includes: a descriptor generating unit 901 which generates a descriptor; a table data generating unit 902 which generates a program map table in which a descriptor is multiplexed; and a packet generating/multiplexing unit 903 which obtains coded video data, coded audio data, the generated table data, then generates TS packets from those data, and multiplexes and outputs the TS packets.

### (Information Recording Medium)

The TS, in which the coded video data, the audio data, and the table data are multiplexed, can be recorded on an information recording medium, such as a hard disk or a Blue-ray disk.

A method of recording the TS onto a writable/readable Blue-ray disk (BD-RE) is disclosed in the Japanese Patent Application Laid-Open No. JP-A-2001-169247.
The document ISO/IEC CD13818-1 (MPEG 2 PART 1) - INTERNATIONAL ORGANIZATION FOR STANDARDIZATION: "PROGRAM SPECIFIC INFORMATION, ANNEX C, ANNEX F, ANNEX H" INFORMATION TECHNOLOGY - GENERIC CODING OF MOVING PICTURES AND ASSOCIATED AUDIO INFORMATION. PART 1: SYSTEMS. DRAFT INTERNATIONAL STANDARDS ISO/IEC DIS 13818-1, GENEVA, ISO, CH, 1 January 1994 (1994-01-01), page 36-45, WITH ANNEXES C, F, H, XP002498323 describes descriptors according to the MPEG standard all having a common format: [tag, lengh, data]. According to this document any privately defined descriptors must adhere to this format. The data portion of this private descriptors are privately defined. In that document a mechanism is proposed in order to extend the number of private descriptors available. Accordingly a private descriptor tag could be privately defined to be constructed as a composite descriptor, entailing privately defining a further sub-descriptor as the first field of the private data bytes of the private descriptor. Each Sub-descriptor presents a sub-descriptor by, a sub-descriptor length, sub private data.

### Disclosure of Invention

However, as described in the "Background Art", a maximum number of descriptors which can be stored in the table data is 255. In the future, there will be a risk of depleting tag types, in consideration of that a great number of tag types are already defined in various standards, such as the MPEG and the ATSC, and that new coding methods will be adopted and the functions will be extended in the future. In other words, if only one descriptor can be stored in the table data, there is a risk that it will become impossible to assign tags to new coding methods or extended functions.

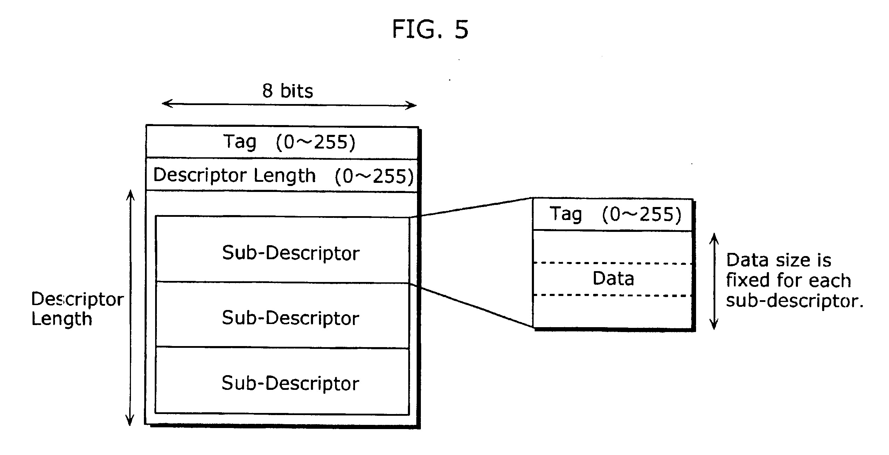

Therefore, in order to avoid such a situation, it is desirable to adopt a hierarchy in a descriptor, in other words, a structure in which a single descriptor has plural sub-descriptors, as shown in FIG. 5. Moreover, if such a sub-descriptor has a data structure in which a sub-descriptor length part is eliminated as shown in FIG. 5, it is possible to reduce data size while storing plural sub-descriptors.

However, if such a data structure without the sub-descriptor length is adopted, since there is no information indicating a data size of the sub-descriptor, a decoder analyzing a descriptor (for example) can not analyze a sub-descriptor which follows the sub-descriptor whose data structure is unknown, even if the former sub-descriptor is an already-known sub-descriptor.

For example, the following situation is considered: in a descriptor, data structures of sub-descriptors 1 and 2, whose tag values are 1 and 2 respectively, are already known, while a data structure of a sub-descriptor 3, whose tab value is 3, is unknown.

If the sub-descriptor 1, the sub-descriptor 2, and the sub-descriptor 3 are stored sequentially in the descriptor, it is possible to analyze the sub-descriptors 1 and 2, since the data structures of these sub-descriptors are known.

However, if the storing order is the sub-descriptor 1, the sub-descriptor 3, and then the sub-descriptor 2, it is possible to analyze the sub-descriptor 1, but not the sub-descriptor 2 which follows the sub-descriptor 3 whose data structure is not known.

A standard is sometimes extended in order not to be obsolete, even after being decided once. Therefore, it is expected that new sub-descriptor types will be added, or the data structures of existing sub-descriptors will be changed. There is a problem that a multiplexer based on a certain standard will be unable to perform normal decoding processing, because the multiplexer cannot analyze added or modified sub-descriptors based on further extended standards, and moreover, cannot analyze even fundamentally analyzable sub-descriptors following the added or modified sub-descriptors, since data lengths of those sub-descriptors are not known.

Here, the problem is explained in more detail and more specifically.

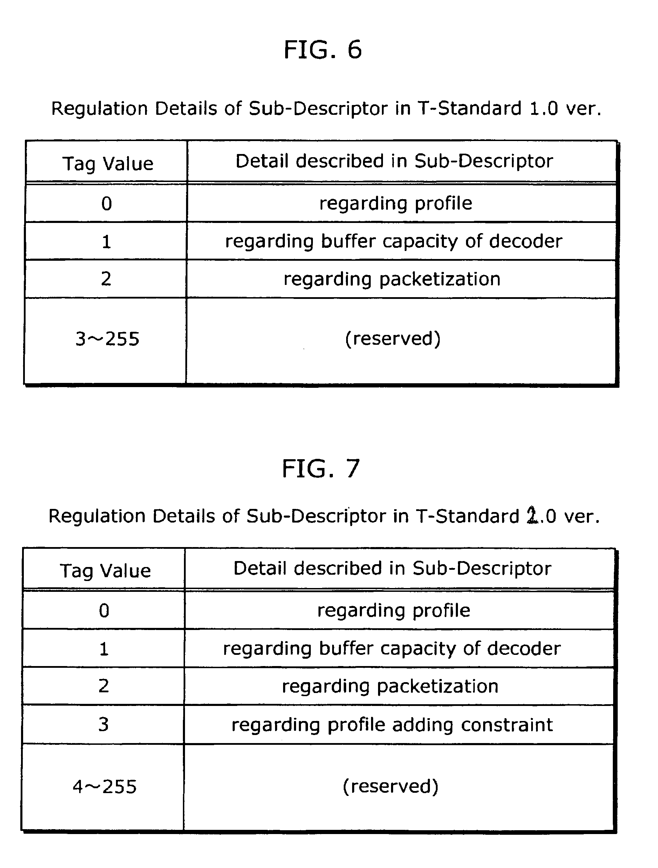

For example, it is assumed that, in a transport stream standard (hereinafter, referred to also as "T-standard") 1.0, which is extended to support a certain new video coding, as shown in FIG. 6, sub-descriptors are regulated as follows: a tag value 0 is regarding a profile; a tag value 1 is regarding a buffer capacity in a decoder; and a tag value 2 is regarding packetization. Further, in a T-standard 2.0, as shown in FIG. 7, an additional tag value 3 is regulated for a descriptor regarding profile adding constraints. Here, in the T-standards, it is regulated to assign the regulation details of sub-descriptors with tag values which are sequentially increased by 1 from a firstly defined smallest value.

In a conventional multiplexer based on the T-standard 1.0, sub-descriptors are stored in an order of tag values 0, 1, and 2, according to a regulation of the T-standard 1.0.

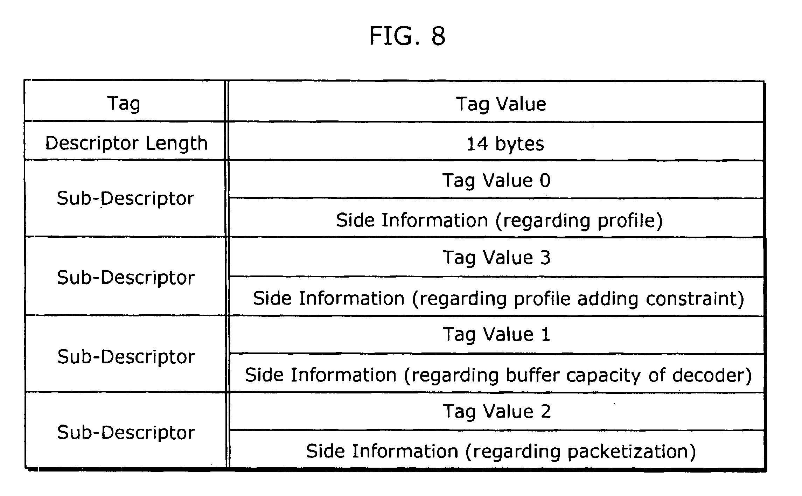

On the other hand, in a multiplexer based on the T-standard 2.0, as shown in FIG. 8, there would be a high possibility that immediately after a sub-descriptor regarding a profile (tag value 0), a sub-descriptor regarding profile adding constraints (tag value 3) is stored, and subsequently sub-descriptors of the tag values 1 and 2 are stored. This is because information regarding the similar details (here, profile) are normally stored continuously.

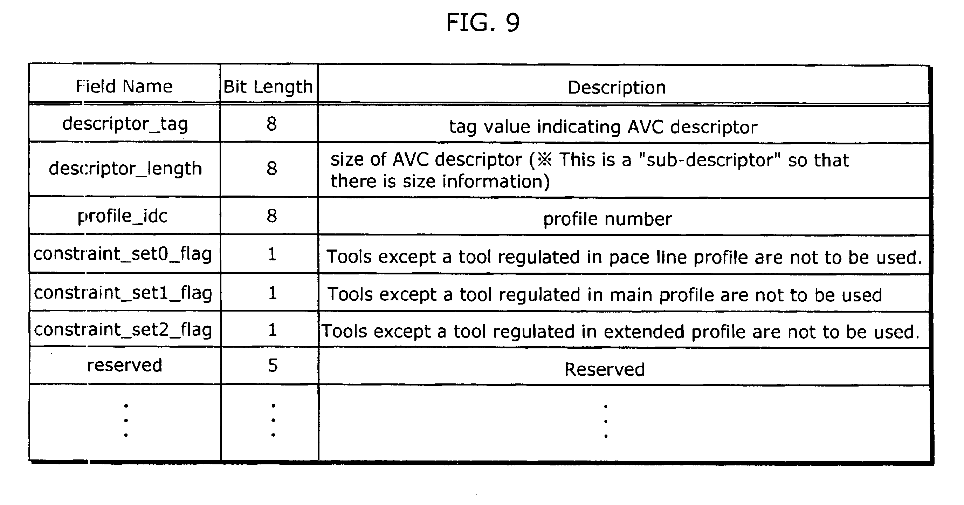

Here, in the MPEG standard (ISO/IEC14496-10, for example), the information regarding a profile represents constraints on tools used in compressing and coding. Examples of the profiles regulated by the information are a base line profile, a main profile, an extended profile, and the like. In the T-standards, the information regarding a profile is assumed to have the same details as described above. Moreover, as the information regarding profile adding constraints, information for further constraining tools applicable in each profile is considered. Examples of such information is constraint_set0_flag, constraint_set1_flag in the same standard ISO/IEC14496-10. An AVC video descriptor (optional) is used when video data compressed by the ISO/IEC14496-10 is stored in a transport stream by MPEG-2. In the AVC video descriptor, the above information is defined in a structure as shown in FIG. 9. This regulation is standardized in 13818-1:2003.

Here, the information regarding a profile corresponds to "profile_idc", the information regarding profile additing constraints corresponds to "constraint_set0_flag", for example.

Thus, if the sub-descriptor regarding profile adding constraints (tag value 3) is defined by the T-standard 2.0, according to the above example of ISO/IEC14496-10, there is a high possibility that a sub-descriptor of the tag value 3 is stored following a sub-descriptor of tag value 0, then subsequently sub-descriptors of tag values 1 and 2 are stored.

As mentioned above, if the sub-descriptor regarding profile adding constraints (tag value 3), which is added by the T-standard 2.0, is stored immediately after the sub-descriptor regarding a profile (tag value 0), then subsequently sub-descriptors of tag values 1 and 2 are stored, a decoder based on the T-standard 1.0 can interpret the sub-descriptor of tag value 0 regarding a profile, but cannot interpret the next sub-descriptor of tag value 3 regarding profile adding constraints. In addition, a size of the descriptor of tag value 3 regarding profile adding constraints is not known, so that it is not possible to interpret the descriptor of tag value 1 regarding a buffer capacity of a decoder nor the descriptor of tag value 2 regarding packetization.

That is, regarding a decoder for decoding video or audio data, there is a problem that if the decoder does not conform to an extended standard, the decoder cannot analyze data coded by the extended standard, even if the data includes side information which the decoder can identify.

Accordingly, in order to solve the above-described technical problems, an object of the present invention is to provide a multiplexer, an information recording medium, and a decoder, each of which can reliably analyze side information which the decoder can fundamentally identified.

In other words, an object of the present invention is to provide a multiplexer, an information recording medium, and a decoder, which can ensure backward compatibility.

### Means to solve the Problem

In order to achieve the above object a multiplexer according to claim 1 is proposed. The invention is defined in the appended claims.

Thereby, a decoder for decoding video or audio data has an effect of reliably analyzing side information which the decoder can identify.

Further, in the multiplexer according to the present invention, the storage rule may define that the sub-descriptors are to be stored in an ascending order of the sub-tag values, the sub-tag values being natural numbers.

Thereby, a larger tag value is assigned to new side information resulted from standard extension, so that the decoder has an effect of reliably analyzing side information which the decoder can identify.

Still further, in the multiplexer according to the present invention, the storage rule may define that the sub-descriptors are to be classified into groups according to when the sub-descriptors are standardized, and a sub-descriptor belonging to a group standardized earlier is to be stored prior to a sub-descriptor belonging to a group standardized later.

Thereby, a larger tag value is assigned to new side information of a sub-descriptor belonging to a group standardized earlier when a standard is extended, so that sub-descriptors can be grouped, which enables the decoder to have an effect of reliably analyzing side information which the decoder can identify.

Still further, in the multiplexer according to the present invention, the sub-descriptor generating unit may includes an internal memory in which the generated sub-descriptors can be stored, and be operable to sort the sub-descriptors to be outputted in the order defined by the storage rule, when the sub-descriptors are not stored in the order in the internal memory.

Thereby, an order of sub-descriptors can be modified to be the same as defined in the storage rule, so that the decoder has an effect of reliably analyzing side information which the decoder can identify.

Still further, the multiplexer according to the present invention may further include: a management information generating unit operable to multiplex flag information for specifying the storage rule of the side information, into management information regarding the packet-multiplexed data ; and a linking unit operable to link the management information with the packet-multiplexed data.

Thereby, the decoder has an effect of previously ensuring that the decoder can analyze side information which the decoder can identify.

Moreover, in an information recording medium, data is recorded, the data being formalled by assigning different packet identifiers to (i) one of coded video data and coded audio data, and (ii) table data regarding the coded data, and packet-multiplexing the coded data and the table data, wherein the table data has a main descriptor which includes: sub-descriptors, each of which includes a sub-tag value representing a type of side information representing a parameter for decoding the coded data, and the side information; and a main tag value representing a set of the sub-descriptors, and the sub-descriptors are stored in an order defined by a predetermined storage rule.

Thereby, a decoder for decoding video or audio data has an effect of reliably analyzing side information which the decoder can identify.

Further, in the multiplexer according to the present invention, management information linked to the packet-multiplexed data may be further recorded, and in the management information, flag information representing the storage rule of the sub-descriptors may be multiplexed.

Thereby, the decoder has an effect of previously ensuring that the decoder can analyze side information which the decoder can identify.

Moreover, a decoder obtains data that is generated by assigning different packet identifiers to (i) one of coded video data and coded audio data, and (ii) table data regarding the coded data, and packet-multiplexing the coded data and the table data, the decoder including: a de-multiplexing unit operable to de-multiplex the coded data and the table data from the packet-multiplexed data, by referring to the packet identifiers; an information analyzing unit operable to analyze a sub-descriptor identified by a main tag value stored in the de-multiplexed table data, and extract side information of the analyzed sub-descriptor; and a data decoding unit operable to decode the coded data based on the extracted side information.

Thereby, the decoder has an effect of reliably analyzing side information which the decoder can identify.

Further, in the multiplexer according to the present invention, the information analyzing unit may be operable to terminate the analyzing, when the sub-descriptor cannot be analyzed.

Thereby, while maintaining backward compatibility, it is possible to quickly conclude the information analyzing processing.

Still further, in the multiplexer according to the present invention, the information analyzing unit may be operable to select, as an effective sub-descriptor, a sub-descriptor positioned more backwards in plural sub-descriptors having the same value, when the plural sub-descriptors are detected from the table data.

Thereby, even if a data structure of side information in a sub-descriptor is changed due to standard extension, there is an effect that the side information included in the sub-descriptor can be reliably extracted.

Note that the present invention can be realized, not only as the multiplexer, the information recording medium, and the decoder, but also as: a multiplexing method and a decoding method using processing performed by the units of the multiplexer, the information recording medium, and the decoder; and a program which causes a computer to execute the processing. Here, it is obvious that such a program can be distributed via a memory medium such as a CD-ROM, or a transmission medium such as the Internet.

Although in the embodiments, both of the coded video data and the coded audio data are treated, but it is obvious that the present invention is also able to treat only the coded video data or only the coded audio data.

### Effect of the Invention

As is apparent from the above description, there is an effect that, by the decoder, the information recording medium, and the decoder according to the present invention, the decoder for decoding video or audio data can reliably analyze side information which the decoder can identify.

Therefore, the present invention for ensuring backward compatibility is highiy suitable for practical use, in recent days the existing decoders have been widely used.

### Brief Description of Drawings

[FIG. 1] FIG.1 is a diagram showing a data structure of a transport stream.
[FIG. 2] FIG. 2 is a diagram showing a data structure of a program map table.
[FIG. 3] FIG. 3 is a diagram showing a data structure of a descriptor.
[FIG. 4] FIG. 4 is a block diagram showing an example of a conventional multiplexer.
[FIG. 5] FIG. 5 is a diagram showing a data structure of a sub-descriptor.
[FIG. 6] FIG. 6 is a diagram showing regulation details of sub-descriptors regulated by a T-standard 1.0.
[FIG. 7] FIG. 7 is a diagram showing regulation details of sub-descriptors regulated by a T-standard 2.0.
[FIG. 8] FIG. 8 is a diagram showing details of sub-descriptors (including a descriptor) generated by a certain multiplexer.
[FIG. 9] FIG. 9 is a diagram showing information regarding profiles in a MPEG standard (ISO/IEC14496-10, for example).
[FIG. 10] FIG. 10 is a block diagram showing a structure of a multiplexer according to the first embodiment of the present invention.
[FIG. 11] FIG. 11 is a flowchart showing one example of processing performed by a sub-descriptor generating unit 14.
[FIG. 12] FIG. 12(a) and FIG. 12(b) are explanatory diagrams showing examples of a storage rule for sub-descriptors.
[FIG. 13] FIG. 13 is a diagram showing details of sub-descriptors (including a descriptor) generated by the multiplexer according to the present invention.
[FIG. 14] FIG. 14 is a block diagram showing a structure of a multiplexer according to the second embodiment of the present invention.
[FIG. 15] FIG. 15 is a diagram showing a data hierarchy of a Blue-ray disk.
[FIG. 16] FIG. 16 is a diagram showing a logic space structure of a Blue-ray disk.
[FIG. 17] FIG. 17 is a block diagram showing a structure of a decoder according to the third embodiment of the present invention.
[FIG. 18] FIG. 18 is a flowchart showing one example of processing performed by an information analyzing unit 22.
[FIG. 19] FIG. 19(a), FIG. 19(b), and FIG. 19(c) are diagrams showing a recording medium, in which a program for realizing an information recording medium, a multiplexer, and a decoder according to the first to third embodiments is stored.

### Numerical References

- 10a, 10b: multiplexer
- 11: descriptor generating unit
- 12: table data generating unit
- 13: packet generating/multiplexing unit
- 14: sub-descriptor generating unit
- 15: management information generating unit
- 16: linking unit
- 20: decoder
- 21: de-multiplexing unit
- 22: information analyzing unit
- 23: data decoding unit
- 101: BD reproducing program
- 102: BD management data
- 103: data in which video and audio are coded
- 104: BD
- 140, 220: table
- TSH: header of TS packet
- PLD: payload of TS packet
- SYN: synchronizing byte
- PID: packet identifier
- Se: sector
- Tr: track
- FD: flexible disk
- F: outer packaging of flexible disk
- FDD: FD drive
- Cs: computer system

### Best Mode for Carrying Out the Invention

The following describes embodiments according to the present invention with reference to the drawings.

### (First Embodiment)

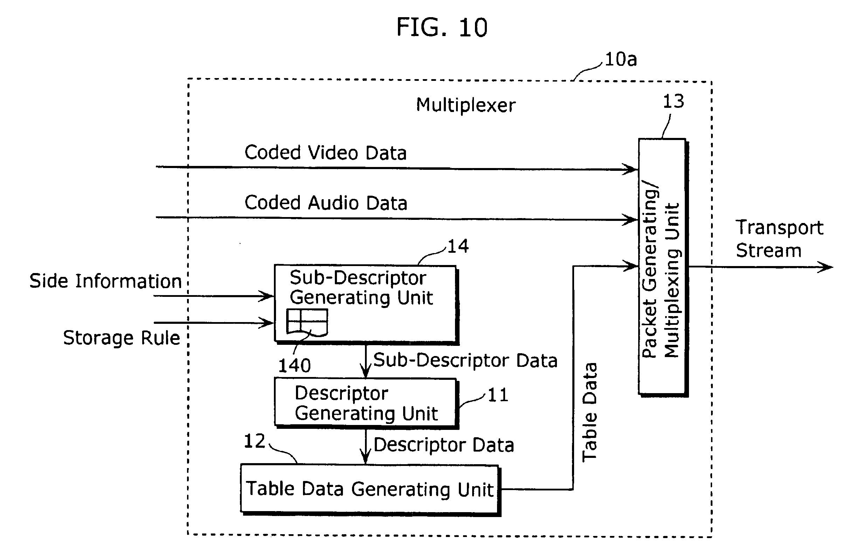

FIG. 10 is a block diagram showing a structure of a multiplexer according to the first embodiment of the present invention.

As shown in FIG. 10, the multiplexer 10a generates data by assigning different packet identifiers to coded video data, coded audio data, and table data regarding those coded data, and packet-multiplexing those data. The multiplexer 10a includes a sub-descriptor generating unit 14, a descriptor generating unit 11, a table data generating unit 12, and a packet generating/multiplexing unit 13.

The sub-descriptor generating unit 14 generates sub-descriptors. More specifically, the sub-descriptor generating unit 14 generates plural sub-descriptors, each of which has: a tag value that represents a type of side information representing a parameter for decoding the coded data; and the side information. The side information includes information representing a motion compensation vector value, a coding method (coding mode), and the like, except the main information such as the coded video data and the coded audio data.

The descriptor generating unit 11 multiplexes the sub-descriptors to generate a descriptor. More specifically, the descriptor generating unit 11 generates a descriptor (main descriptor) having: the plural sub-descriptors generated by the sub-descriptor generating unit 14; and a tag value (main tag value) representing a set of the plural sub-descriptors.

The table data generating unit 12 generates a program map table in which the descriptor is multiplexed. More specifically, the table data generating unit 12 generates table data in which the descriptor generated by the descriptor generating unit 11 is associated with the packet identifier of the coded data.

The packet generating/multiplexing unit 13 obtains at least the coded video data, the coded audio data, and the program map table, in order to generate TS packets, and multiplexes the TS packets to be outputted.

Examples of applicable coding method for the coded video and audio data are: methods standardized by the MPEG, ITU-T, the SMPTE, and the like (ISO/IEC13818, ISO/IEC14496, and the like, for example); and methods regulated by operation standards of DVD, BD, and the like. Moreover, besides the TS packet sequence of 188 bytes length, a format of the TS outputted by the multiplexer 10a may be a packet sequence of 192 bytes length in which an additional header of 4 bytes is added to the beginning of each TS packet.

In the additional header of 4 bytes, a program clock reference (PCR) is commonly recorded. The PCR is obtained by sampling a clock value generated from clock information in the multiplexer.

Further, descriptor types are regulated by standards such as the MPEG, and service operation standards. Especially, as a descriptor in which sub-descriptors are stored, a registration descriptor, a conditional access descriptor, a copyright descriptor, and the like, which are standardized by the MPEG, can be used.

As shown in FIG. 5, a data structure of a descriptor includes: a descriptor tag for identifying a type of the descriptor; a descriptor length representing the number of bytes of data following the descriptor length; and descriptor data. A sub-descriptor is a part of the descriptor data. A sub-descriptor has: a sub-descriptor tag for identifying a type of the sub-descriptor; and sub-descriptor data (side information).

Besides a profile which is information regarding a coding method applied to the video or the audio, and information of level, examples of the side information may be information of a buffer size required for decoding, information of a packetized unit of the coded data that is information regarding packetization and multiplexing, and the like.

In the multiplexer 10a shown in FIG. 10, the sub-descriptor generating unit 14 holds a table 140 storing the latest sub-descriptor regulation details (details of a regulation regardig sub-descriptors as shown in FIG. 7, for example); obtains the side information and a storage rule instructing an order of storing the side information; generates sub-descriptors from the side information; sorts the sub-descriptors according to the storage rule, if necessary; and outputs the sub-descriptors.

The processing performed by the sub-descriptor generating unit 14 is described herein below more specifically.

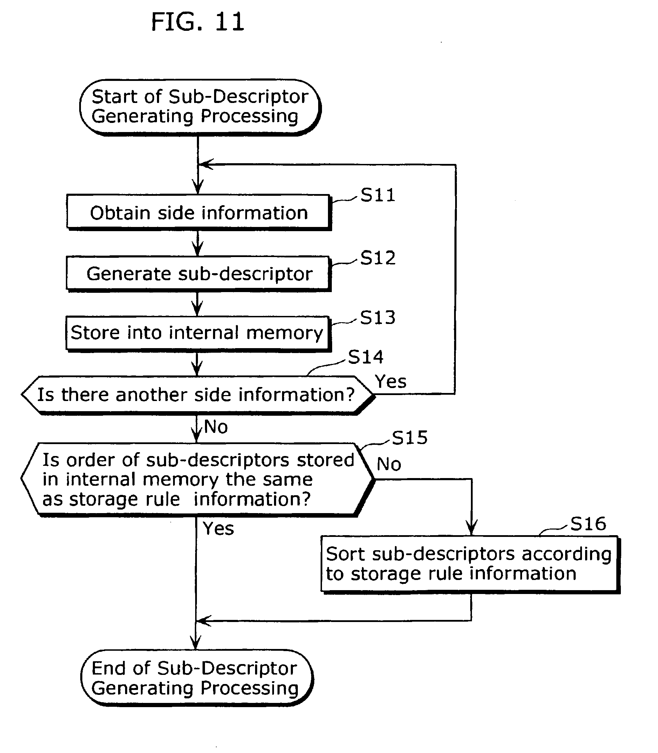

FIG. 11 is a flowchart showing the processing performed by the sub-descriptor generating unit 14.

The sub-descriptor generating unit 14 firstly obtains one side information (S11), generates a sub-descriptor by assigning the side information with a tag value according to the side information (S12), and stores the generated sub-descriptor into an internal memory (S13). Next, the sub-descriptor generating unit 14 determines whether or not there is another side information (S14). If there is another side information (Yes at S14), then the processing loops back to Step S11, and the sub-descriptor generating unit 14 repeats Steps S11 to S13 until there is no side information. If there is no side information, in other words, if all side information have been used to generate sub-descriptors (No at S14), then the sub-descriptor generating unit 14 obtains storage rule information, and determines whether or not an order of the plural sub-descriptors held in the internal memory is the same as defined in the storage rule information (S15).

If the order is the same as the storage rule information (Yes at S15), then the sub-descriptor generating unit 14 outputs the plural sub-descriptors in the order as defined in the storage rule information, and the sub-descriptor generation processing is terminated. On the other hand, if the order is different from an order defined in the storage rule information (No at S15), then the sub-descriptor generating unit 14 sorts the plural sub-descriptors held in the internal memory, according to the storage rule information, then outputs a sequence of the sorted sub-descriptors, and the sub-descriptor generation processing is terminated.

The descriptor generating unit 11 obtains the sub-descriptors generated by the sub-descriptor generating unit 14, then multiplexes the sub-descriptors to generate a descriptor having the data structure as shown in FIG. 3, and outputs the descriptor.

The table data generating unit 12 multiplexes the descriptor generated by the descriptor generating unit 11 to generate table data as shown in FIG. 2 to be outputted.

The packet generating/multiplexing unit 13 obtains the coded video data, the coded audio data, and the table data, then packetizes the data to TS packets, and multiplexes the TS packets to be outputted.

Here, two desirable examples of the storage rule are described.

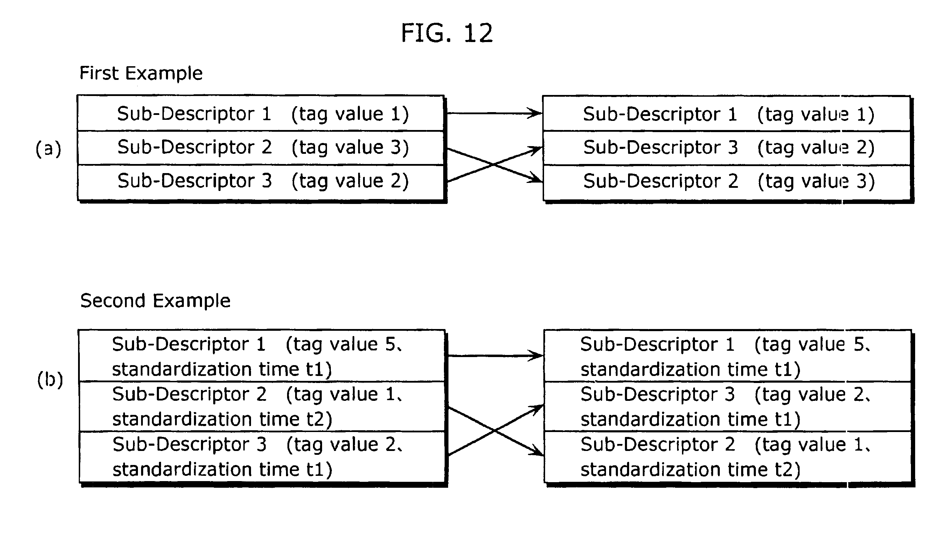

FIG. 12 shows diagrams for explaining the two desirable examples of the storage rule. Especially FIG. 12(a) shows one storage rule defining that tag values of sub-descriptors are natural numbers, each of which is equal to or more than 1 and stored in ascending order. FIG. 12(b) shows the other storage rule defining that sub-descriptors are classified into groups according to when the sub-descriptors are standardized, so that a sub-descriptor belonging to a group standardized earlier to be stored prior to a sub-descriptor belonging to a group standardized later.

The first example is, as shown in FIG. 12(a), the storage rule defining that tag values of sub-descriptors are natural numbers, each of which is equal to or more than 1 and stored in ascending order. This is because, it is general in standards that a firstly standardized sub-descriptor is assigned with a small tag value, and when another sub-descriptor is newly defined due to extension of the standard, the new sub-descriptor is often assigned with a larger tag value.

Now, at Step S13, it is assumed that a sub-descriptor 1 (tag value 1), a sub-descriptor 2 (tag value 3), and a sub-descriptor 3 (tag value 2) are sequentially stored in the internal memory in this order. In this case, at Step S16, the sub-descriptors are sorted in an order of the sub-descriptor 1 (tag value 1), the sub-descriptor 3 (tag value 2), and the sub-descriptor 2 (tag value 3), in order to be outputted. Note that it has been described that the tag values of the sub-descriptors are natural numbers, each of which is equal to or more than 1 and stored in ascending order, but it is also possible that the tag values are natural numbers, each of which is equal to or more than 0 and stored in ascending order.

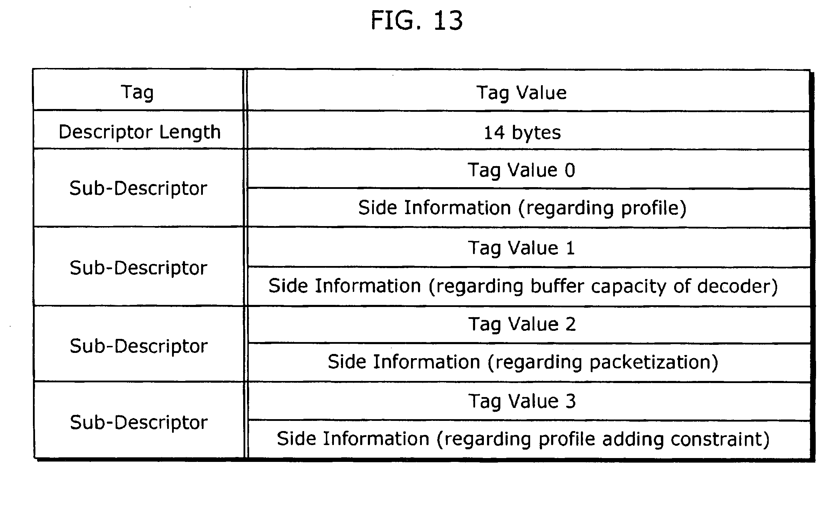

For example, if the sub-descriptors are stored in the internal memory in the order shown in FIG. 8, the sub-descriptor generating unit 14 sorts the sub-descriptors in ascending order of the tag value 0, the tag value 1, the tag value 2, and the tag value 3, as shown in FIG. 13.

The second example is, as shown in FIG. 12(b), the storage rule defining that sub-descriptors are classified into groups according to when the sub-descriptors are standardized, so that a sub-descriptor belonging to a group standardized earlier is to be stored prior to a sub-descriptor belonging to a newly standardized group. It is assumed that the sub-descriptors have been defined at two different times, namely, at standardization times t1 and t2 (t1<t2).

Now, at Step S13, it is assumed that a sub-descriptor 1 (tag value 5, standardization time t1), a sub-descriptor 2 (tag value 1, standardization time t2), and a sub-descriptor 3 (tag value 2, standardization time t1) are sequentially stored in the internal memory in this order. In this case, at Step S16, the sub-descriptors are sorted in an order of the sub-descriptor 1, the sub-descriptor 3, and the sub-descriptor 2, or in an order of the sub-descriptor 3, the sub-descriptor 1, and the sub-descriptor 2, in order to be outputted. The sub-descriptors 1 and 3 have the same standardization time t1 and belong to the same group, so that the order of the sub-descriptors 1 and 3 in the group can be switched. The storage rule information is a reference table in which a tag value of each sub-descriptor is associated with a standardization time. The sub-descriptor generating unit 14 can obtain the reference table from the outside, or can previously hold the reference table.

Therefore, a decoder for decoding video or audio data has an effect of reliably analyzing the side information which the decoder can identify, so that backward compatibility is ensured.

Note that the TS data outputted by the multiplexer according to the present invention can be transmitted via broadcast waves or radio waves, or can be stored in a storage medium such as a DVD, a Blue-ray disk, or a hard disk.

Note also that the first embodiment has described the multiplexer as a hardware, but the multiplexer is not limited to the above. For example, the above-described multiplexer can be realized also as a software program which is executed by a central processing unit (CPU) or a digital signal processing device (DSP). Note also that the above-described multiplexer may be realized as a large scale integration (LSI).

### (Second Embodiment)

Next, a multiplexer according to the second embodiment of the present invention is described.

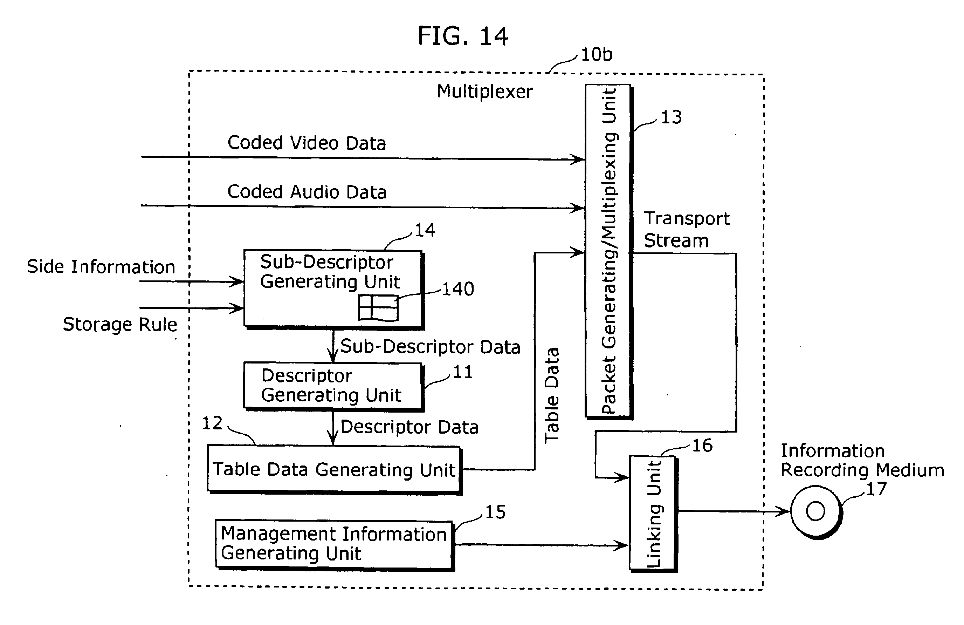

FIG. 14 is a block diagram showing a structure of the multiplexer according to the second embodiment of the present invention.

As shown in FIG. 14, the multiplexer 10b includes the sub-descriptor generating unit 14, the descriptor generating unit 11, the table data generating unit 12, the packet generating/multiplexing unit 13, which are included in the multiplexer 10a. In addition to those units 11 to 14, the multiplexer 10b further has: a management information generating unit 15 for generating management information data; and a linking unit 16 for linking the management information data to a TS in which at least video data, audio data, and a program map table are multiplexed.

Here, processing performed by the sub-descriptor generating unit 14, the descriptor generating unit 11, the table data generating unit 12, and the packet generating/multiplexing unit 13 are the same as the processing performed by the sub-descriptor generating unit 14, the descriptor generating unit 11, the table data generating unit 12, and the packet generating/multiplexing unit 13 in FIG. 10 which have been described for the multiplexer according to the first embodiment. Therefore, these units are not described again herein below, and only the management information generating unit 15 and the linking unit 16 are described.

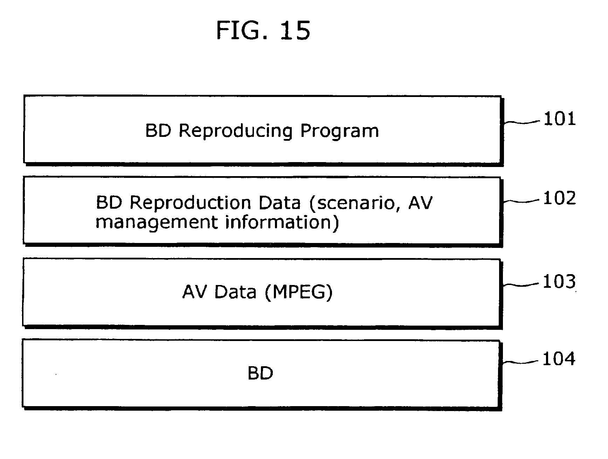

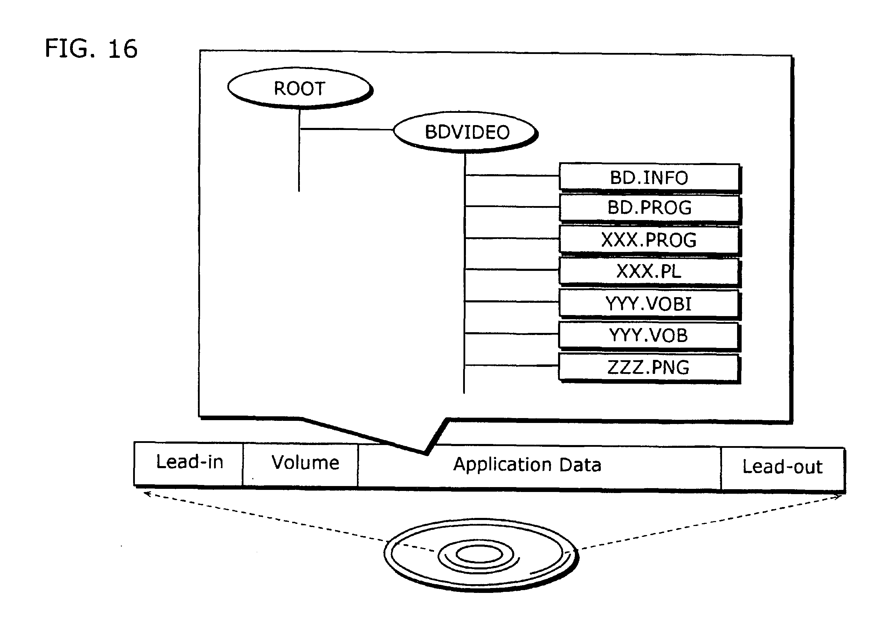

In the management information data generated by the management information generating unit 15, various attribute information of audio-visual data, and information for N times speed reproduction (special reproduction) are stored. The management information data is recorded onto a storage medium such as a hard disk, a DVD, a Blue-ray disk (BD), together with video or audio data. The following describes, as one example, a read-only BD-ROM with reference to FIGS. 15 and 16.

FIG. 15 is a schematic diagram showing a structure of the BD-ROM.

The BD-ROM has a BD disk 104 which is a disk medium, and data 101, 102, and 103 which are recorded in the disk. The data recorded in the BD disk 104 includes: coded video and audio data 103; management information 102 regarding the coded data; and a BD reproducing program 101 for realizing interactivity such as menu operations by a user.

FIG. 16 is a diagram showing a directory file structure of logical data recorded in the BD.

As other optical disks such as DVD and CD, the BD disk also has recording areas concentrically from the inter periphery to the outer periphery, and there is a logical address space for recording logical data, between lead-in at the inter periphery and lead-out at the outer periphery. In the logical address space, file system information (volume) is recorded at the beginning, and then coded video or audio data, table data, and the like are recorded. In the case of general application software in which a movie or the like is recorded, a BDVIDEO directory is placed directly under a ROOT directory. In this BDVIDEO directory, application data and data such as the management information (101, 102, and 103 in FIG. 15) are stored. Under the BDVIDEO directory, at least the following six kinds of files are generally placed.

1 BD.INFO: This file is one of the BD management information. In BD.INFO, information regarding the entire BD is recorded.

2 BD.PROG: This file is one of the BD reproducing programs. In BD.PROG, reproduction control information regarding the entire BD disk is recorded.

3 XXX.PL ("XXX" is variable): This file is one of the BD management information. In XXX.PL, playlist information which is a scenario (reproduction sequence) is recorded. Each playlist has one file.

4 XXX.PROG ("XXX" is variable): This file is one of the BD reproducing programs. In XXX.PROG, reproduction control information regarding XXX.PL is recorded.

5 YYY.VOB ("YYY" is variable): This file is one of TS in which coded video or audio data and table data are multiplexed.

6 YYY.VOBI ("YYY" is variable): This file is one of the BD management information. In YYY.VOBI, management information regarding YYY.VOB is recorded.

The management information generating unit 15 generates the above-described management information. Further, in the second embodiment, information indicating the storage rule of sub-descriptors used in the sub-descriptor generating unit 14 is multiplexed into the management information. The management information is divided into plural files, to be stored into BD.INFO, BD.PROG, or XXX.PL. Furthermore, it is possible to associate the storage rule of sub-descriptors with an existing data field of the management information data.

For example, if a linking rule is to be associated with an existing data field of XXX.PL in which playlist information is recorded, the following way is possible.

In XXX.PL, there is at least one or more "PlayItem()". In each "PlayItem()", a table called "STN_table()" is recorded. In "STN_table()", "stream_attributes()" is recorded for each coded video or audio data. In "stream_attributes()", there is a "stream_coding_type" field representing a coding method. Here, it is possible to define that, when "stream_coding_type" field has a particular value, the linking rule regarding sub-descriptors is thereby indicated.

The linking unit 16 links the above-described management information to a multiplexed TS packet (added with a 4-byte header at the beginning), and outputs the linked data. Moreover, the linked data is recorded onto the BD 17.

The above has described the multiplexer according to the second embodiment of the present invention.

Therefore, a decoder for decoding video or audio data has an effect of reliably analyzing the side information which the decoder can identify, so that backward compatibility is ensured.

Furthermore, flag information for specifying a storage rule of the side information is multiplexed in the management information, so that the decoder has an effect of previously ensuring that the decoder can analyze the side information which the decoder can identify.

Note that the second embodiment has described that the linked data is recorded onto the BD, but this is not limited to the above and the linked data may be recorded onto a storage medium such as a hard disk or a DVD.

Note also that the second embodiment has described the multiplexer as a hardware, but the multiplexer is not limited to the above. For example, the above-described multiplexer can be realized also as a software program which is executed by a central processing unit (CPU) or a digital signal processing device (DSP). Note also that the above-described multiplexer may be realized as a large scale integration (LSI).

### (Third Embodiment)

The following describes a decoder according to the third embodiment of the present invention.

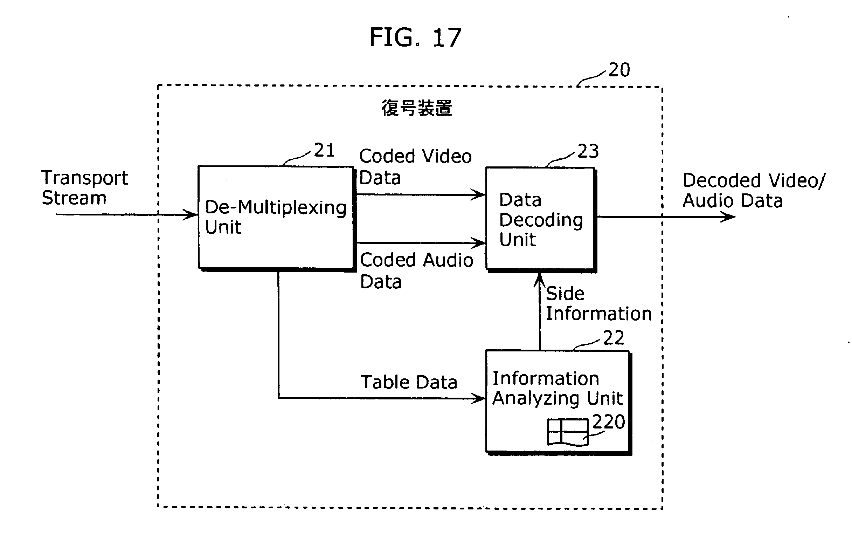

FIG. 17 is a block diagram showing a structure of the decoder according to the third embodiment of the present invention.

The decoder 20 has: a de-multiplexing unit 21 which obtains a TS in which coded video or audio data, and table data are multiplexed, and de-multiplexes the TS; an information analyzing unit 22 which analyzes sub-descriptors stored in the table data and classified by tag values; and a data decoding unit 23 which decodes coded video or audio data with reference to the side information included in the analyzed sub-descriptors.

More specifically, the decoder 20 receives data in which at least one of coded video data and coded audio data, and table data are assigned with different packet identifiers and packet-multiplexed. The decoder 20 has: the de-multiplexing unit 21 which de-multiplexes the coded data and the table data from the packet-multiplexed data, by referring to the packet identifiers; the information analyzing unit 22 which analyzes sub-descriptors identified by a tag value (main tag value) stored in the de-multiplexed table data, and extracts the analyzed side information; and the data decoding unit 23 which decodes the coded data based on the extracted side information.

Here, the information analyzing unit 22 holds a table 220 in which details of the sub-descriptor regulation (details of a regulation regarding sub-descriptors shown in FIG. 6, for example) are stored. When plural sub-descriptors having the same tag value are detected in the table data, a sub-descriptor placed more backwards among the sub-descriptors is used as a formal sub-descriptor. The table data is a program map table standardized by the MPEG.

Next, processing performed by the information analyzing unit 22 is described more specifically.

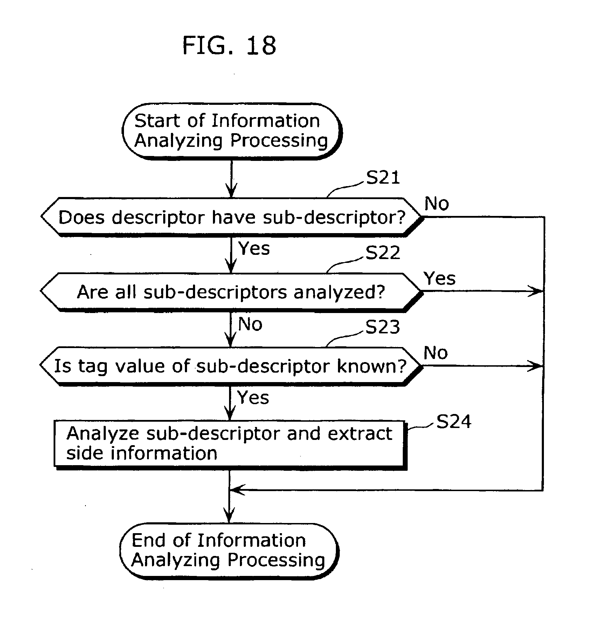

FIG. 18 is a flowchart showing processing performed by the information analyzing unit 22.

The information analyzing unit 22 firstly determines whether or not any sub-descriptor is stored in a descriptor associated with video or audio data in the program map table, in other words, whether or not the descriptor has any sub-descriptor (S21). This is because the data structure is regulated by a tag value of the descriptor, which can be used to determine whether or not the descriptor has any sub-descriptor.

If the descriptor has any sub-descriptor (Yes at S21), then the information analyzing unit 22 determines whether or not all sub-descriptors have been analyzed (S22).

If there remains any sub-descriptor which has not yet been analyzed (No at S22), then the information analyzing unit 22 examines a tag of the sub-descriptor to determine whether or not the data structure is known by the tag value, in other words, whether or not a tag value of the sub-descriptor is known (S23).

If the data structure is known (Yes at S23), then the information analyzing unit 22 reads side information stored in a data field of the sub-descriptor following the tag, and analyzes the side information (S24).

On the other hand, when the data structure is unknown, even if there is any sub-descriptor which has not yet analyzed (No at S21, Yes at S22, No at S23), the information analyzing unit 22 cancels subsequent analyzing processing and the processing is terminated.

This means that the information analyzing unit 22 ends the information analyzing processing, not only when all sub-descriptors have been analyzed, but also when a certain sub-descriptor cannot be analyzed.

Therefore, while maintaining backward compatibility, it is possible to quickly conclude the information analyzing processing.

Note that, if plural sub-descriptors having the same tag value are detected at S23, a sub-descriptor detected later is considered effective, and sub-descriptors stored prior to the effective sub-descriptor are canceled. This means that, the side information included in the canceled sub-descriptors are not used as reference in decoding processing by the data decoding unit 23.

Therefore, even if a data structure of side information in a sub-descriptor is changed due to standard extension, there is an effect that the side information included in the sub-descriptor can be reliably extracted.

Note also that the third embodiment has described the multiplexer as a hardware, but the multiplexer is not limited to the above. For example, the above-described multiplexer can be realized also as a software program which is executed by a central processing unit (CPU) or a digital signal processing device (DSP). Note also that the above-described multiplexer may be realized as a large scale integration (LSI).

### (Fourth Embodiment)

Furthermore, by recording, onto a recording medium such as a flexible disk, a software program for realizing the information recording medium, the multiplexer, and the decoder described in the above embodiments on a CPU or a DSP, it is possible to easily perform the processing as described in the above embodiments in an independent computer system.

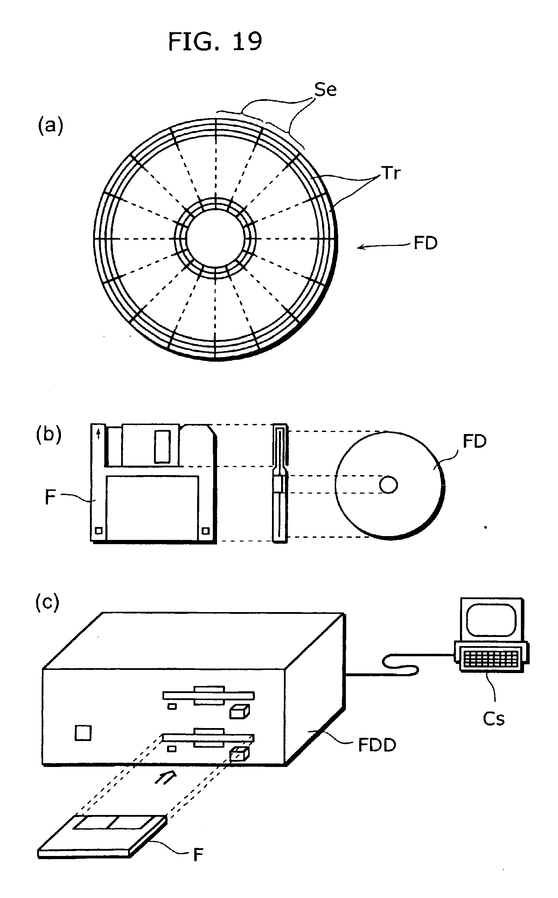

FIG 19 are explanatory diagrams in which the reproducing method and the recording method according to the above embodiments are perform by the computer system, using a program recorded in a recording medium such as a flexible disk.

FIG. 19(b) shows a front view and a cross-sectional view of the flexible disk, and a view of the flexible disk itself, and FIG. 19(a) shows an example of a physical format of the flexible disk, as a recording medium body. The flexible disk FD is contained in the case F, and on a surface of the disk, plural tracks Tr are formed concentrically from the outer periphery to the inner periphery, and each track is segmented into sixteen sectors Se in an angular direction. Therefore, in the flexible disk storing the above program, the program is recorded in an area allocated on the above flexible disk FD

Moreover, FIG. 19(c) shows a structure for recording and reproducing the above program on the flexible disk FD. When the program for realizing the reproducing method and the recording method is recorded onto the flexible disk FD, the program is written from a computer system Cs via a flexible disk drive. When the reproducing method and the recording method for realizing the reproducing method and the recoding method is constructed in the computer system using the program in the flexible disk, the program is read out from the flexible disk via the flexible disk drive and transferred to the computer system.

Note that the above has described that the recording medium is assumed to be the flexible disk, but the recording medium may also be an optical disk. Note also that, the recording medium is not limited to the above mediums, but any other mediums, such as an IC card and a ROM cassette, can be also used, as far as the mediums can record the program.

### Industrial Applicability

In the information recording medium, the multiplexer, and the decoder according to the present invention, side information regarding video or audio data can be stored into table data, so that the side information can be analyzed efficiently and reliably. Thereby the present invention is effective as a package medium in which coded data such as video or audio is recorded; an apparatus in a broadcast station; a home server; and an audio-visual apparatus which records data onto CD, DVD, BD, HD, and reproduces the data.

## Claims

1. A multiplexer (10a, 10b) which generates data by assigning different packet identifiers to (i) one of coded video data and coded audio data, and (ii) table data regarding the coded data, and packet-multiplexing the coded data and the table data, said multiplexer (10a, 10b) comprising:
a sub-descriptor generating unit (14) operable to generate sub-descriptors, each of which consists of a sub-tag value representing a type of side information, and the side information, the side information representing a parameter for decoding the coded data;
a main descriptor generating unit (11) operable to generate a main descriptor comprising
- descriptor data which include the sub-descriptors generated by said sub-descriptor generating unit (14),
- a main tag value representing a set of the sub-descriptors, and
- a length value representing the length of the descriptor data; and
a table generating unit (12) operable to generate the table data, by associating the main descriptor generated by said main descriptor generating unit (11), with the packet identifier of the coded data,
**characterized in that** the size of the side information is fixed for each sub-descriptor and that said sub-descriptor generating unit (14) is operable to output the sub-descriptors in an order defined by a predetermined rule, said rule being according to the order of subsequent extensions of the stander to which said sub-descriptors relate.

2. The multiplexer (100, 106) according to claim 1,
wherein said rule defines that the sub-descriptors are to be output in an ascending order of the sub-tag values, the sub-tag values being natural numbers.

3. The multiplexer (100, 106) according to claim 1,
wherein said rule defines that the sub-descriptors are to be classified into groups according to when the sub-descriptors are standardized, and a sub-descriptor belonging to a group standardized earlier is to be output prior to a sub-descriptor belonging to a group standardized later.

4. The multiplexer (100, 106) according to claim 1,
wherein said sub-descriptor generating unit includes an internal memory in which the generated sub-descriptors can be stored, and
is operable to sort the sub-descriptors to be outputted in the order defined by said rule, when the sub-descriptors are not stored in the order in the internal memory.

5. The multiplexer (100, 106) according to claim 1, further comprising:
a management information generating unit operable to multiplex flag information for specifying said rule of the side information, into management information regarding the packet-multiplexed data ; and
a linking unit operable to link the management information with the packet-multiplexed data.

6. An information recording medium (17) in which data is recorded, the data being formalled by assigning different packet identifiers to (i) one of coded video data and coded audio data, and (ii) table data regarding the coded data, and packet-multiplexing the coded data and the table data,
wherein the table data has a main descriptor comprising descriptor data which include:
- sub-descriptors, each of which consists of a sub-tag value representing a type of side information representing a parameter for decoding the coded data, and the side information;
- and a main tag value representing a set of the sub-descriptors, and
- a length value representing the length of the descriptor data; and **characterized in that** the size of the side information is fixed for each sub-descriptor and that
the sub-descriptors are stored in an order defined by a predetermined storage rule, said rule being according to the order of subsequent extensions of the standing to which said sub-descriptiors relate.

7. The information recording medium (17) according to claim 6,
wherein management information linked to the packet-multiplexed data is further recorded, and
in the management information, flag information representing the storage rule of the sub-descriptors is multiplexed.

8. A decoder (20) which obtains data that is generated by assigning different packet identifiers to (i) one of coded video data and coded audio data, and (ii) table data regarding the coded data, and packet-multiplexing the coded data and the table data, said decoder comprising:
a de-multiplexing unit (21) operable to de-multiplex the coded data and the table data from the packet-multiplexed data, by referring to the packet identifiers;
wherein the table data has a main descriptor comprising descriptor data which include:
- sub-descriptors, each of which consists of a sub-tag value representing a type of side information representing a parameter for decoding the coded data, and the side information; and
- a main tag value representing a set of the sub-descriptors, and
- a length value representing the length of the descriptor data; and
an information analyzing unit operable to analyze the sub-descriptor identified by the main tag value stored in the de-multiplexed table data, and extract side information of the analyzed sub-descriptor; and
a data decoding unit operable to decode the coded data based on the extracted side information
**characterized in that** the size of the side information is fixed for each subdescriptor and that the sub-descriptors are decoded in an order defined by a predetermined rule, said rule being according to the order of subsequent extensions of the standard to which said sub-descriptors relate.

9. The decoder (20) according to claim 8,
wherein said information analyzing unit is operable to terminate the analyzing, when the sub-descriptor cannot be analyzed.

10. The decoder (20) according to claim 8,
wherein said information analyzing unit is operable to select, as an effective sub-descriptor, a sub-descriptor positioned more backwards in plural sub-descriptors having the same value, when the plural sub-descriptors are detected from the table data.

11. A multiplexing method of generating data by assigning different packet identifiers to (i) one of coded video data and coded audio data, and (ii) table data regarding the coded data, and packet-multiplexing the coded data and the table data, said method comprising steps of:
generating sub-descriptors, each of which consists of a sub-tag value representing a type of side information, and the side information, the side information representing a parameter for decoding the coded data;
generating a main descriptor comprising
- descriptor data which include the sub-descriptors generated in said generating of the sub-descriptors,
- a length value representing the length of the descriptor data; and
- a main tag value representing a set of the sub-descriptors; and
generating the table data, by associating the main descriptor generated in said generating of the main descriptor, with the packet identifier of the coded data,
**characterized in that** the size of the side information is fixed for each sub-descriptor and that
wherein in said generating of the sub-descriptors, the sub-descriptors are outputted in an order defined by a predetermined rule, said rule being according to the order of subsequent extensions of the standard to which said sub-descriptors relate.

12. A computer programme comprising code means adapted, when said computer program is run on a computer, to carry out a multiplexing method of generating data by assigning different packet identifiers to (i) one of coded video data and coded audio data, and (ii) table data regarding the coded data, and packet-multiplexing the coded data and the table data, said computer programme comprising:
code means for generating sub-descriptors, each of which consists of a sub-tag value representing a type of side information, and the side information, the side information representing a parameter for decoding the coded data;
code means for generating a main descriptor comprising
- descriptor data which include the sub-descriptors generated in said generating of the sub-descriptors,
- a length value representing the length of the descriptor data; and
- a main tag value representing a set of the sub-descriptors; and code means for generating the table data, by associating the main descriptor generated in said generating of the main descriptor, with the packet identifier of the coded data,
**characterized in that** the size of the side information is fixed for each sub-descriptor and that
wherein in said generating of the sub-descriptors, the sub-descriptors are outputted in an order defined by a predetermined rule, said rule being according to the order of subsequent extensions of the standard to which said sub-descriptors relate.

13. A decoding method of obtaining data that is generated by assigning different packet identifiers to (i) one of coded video data and coded audio data, and (ii) table data regarding the coded data, and packet-multiplexing the coded data and the table data said method comprising steps of:
de-multiplexing the coded data and the table data from the packet-multiplexed data, by referring to the packet identifiers;
wherein the table data has a main descriptor comprising descriptor data which include:
- sub-descriptors, each of which consists of a sub-tag value representing a type of side information representing a parameter for decoding the coded data, and the side information; and
- a main tag value representing a set of the sub-descriptors, and
- a length value representing the length of the descriptor data; and
analyzing the sub-descriptor identified by the main tag value stored in the de-multiplexed table data, and extract side information of the analyzed sub-descriptor; and
decoding the coded data based on the extracted side information,
**characterized in that** the size of the side information is fixed for each sub-descriptor, and that the sub-descriptors are decoded in an order defined by a predetermined rule, said rule being according, to the order of subsequent extensions of the standard to which said sub-descriptors relate.

14. A computer programme comprising code means adapted, when said computer programme is run on a computer, to carry out a decoding method of obtaining data that is generated by assigning different packet identifiers to (i) one of coded video data and coded audio data, and (ii) table data regarding the coded data, and packet-multiplexing the coded data and the table data, said computer programme comprising:
code means for de-multiplexing the coded data and the table data from the packet-multiplexed data, by referring to the packet identifiers;
wherein the table data has a main descriptor comprising descriptor data which include:
- sub-descriptors, each of which consists of a sub-tag value representing a type of side information representing parameter for decoding the coded the side information; and
- a main tag value representing a set of the sub-descriptors, and
- a length value representing the length of the descriptor data; and
code means for analyzing the sub-descriptor identified the main tag value stored in the de-multiplexed table data, and extract side information of the analyzed subdescriptor, and
code means for decoding the coded data based on the extracted side information, **characterized in that** the size of the side information is fixed for each sub-descriptor, and that the sub-descriptors are decoded in an order defined by a predetermined rule, said rule being according to the order of subsequent extensions of the standard to which said sub-descriptors relate.

## Patentansprüche

1. Multiplexer (10a, 10b), der Daten durch Zuordnen von unterschiedlichen Paket-Identifizierern zu (i) kodierten Videodaten oder kodierten Audiodaten und (ii) Tabellendaten hinsichtlich der kodierten Daten erzeugt und die kodierten Daten und die Tabellendaten paket-multiplext, wobei der Multiplexer (10a, 10b) umfasst:
eine Sub-Deskriptor-Erzeugungseinheit (14), die ausgestaltet ist, Sub-Deskriptoren zu erzeugen, von denen jeder aus einem Sub-Tag-Wert, der eine Art von Seiteninformation darstellt, und der Seiteninformation besteht, wobei die Seiteninformation einen Parameter zum Dekodieren der kodierten Daten darstellt,
eine Haupt-Deskriptor-Erzeugungseinheit (11), die ausgestaltet ist, einen Haupt-Deskriptor zu erzeugen, der umfasst:
- Deskriptordaten, die die Sub-Deskriptoren umfassen, die von der Sub-Deskriptor-Erzeugungseinheit (14) erzeugt wurden,
- einen Haupt-Tag-Wert, der einen Satz der Sub-Deskriptoren darstellt, und
- einen Längen-Wert, der die Länge der Deskriptor-Daten darstellt, und
eine Tabellenerzeugungseinheit (12), die ausgestaltet ist, die Tabellendaten durch Zuordnen des Haupt-Deskriptors, der von der Haupt-Deskriptor-Erzeugungseinheit (11) erzeugt wurde, zu dem Paket-Identifizierer der kodierten Daten zu erzeugen,
**dadurch gekennzeichnet, dass** die Größe der Seiteninformation für jeden Sub-Deskriptor fixiert ist und dass die Sub-Deskriptor-Erzeugungseinheit (14) ausgestaltet ist, die Sub-Deskriptoren in einer Reihenfolge auszugeben, die durch eine vorbestimmte Regel definiert ist, wobei die Regel gemäß der Reihenfolge von folgenden Erweiterungen des Standards ist, auf den sich die Sub-Deskriptoren beziehen.

2. Multiplexer (100, 106) nach Anspruch 1,
wobei die Regel definiert, dass die Sub-Deskriptoren in einer ansteigenden Reihenfolge der Sub-Tag-Werte ausgegeben werden, wobei die Sub-Tag-Werte ganze Zahlen sind.

3. Multiplexer (100, 106) nach Anspruch 1,
wobei die Regel definiert, dass die Sub-Deskriptoren in Gruppen zu klassifizieren sind, entsprechend zu wann die Sub-Deskriptoren standardisiert sind, und ein Sub-Deskriptor, der zu einer früher standardisierten Gruppe gehört, vor einem Sub-Deskriptor ausgegeben wird, der zu einer später standardisierten Gruppe gehört.

4. Multiplexer (100, 106) nach Anspruch 1,
wobei die Sub-Deskriptor-Erzeugungseinheit einen internen Speicher aufweist, in dem die erzeugten Sub-Deskriptoren gespeichert werden können, und
ausgestaltet ist, die auszugebenden Sub-Deskriptoren in der Reihenfolge zu sortieren, die von der Regel vorgegeben ist, wenn die Sub-Deskriptoren nicht in der Reihenfolge in dem internen Speicher gespeichert sind.

5. Multiplexer (100, 106) nach Anspruch 1, ferner mit:
einer Verwaltungsinformationserzeugungseinheit, die ausgestaltet ist, Flag-Information zum Spezifizieren der Regel der Seiteninformation in Verwaltungsinformation hinsichtlich der paket-gemultiplexten Daten zu multiplexen, und
eine Verbindungseinheit, die ausgestaltet ist, die Verwaltungsinformation mit den paket-gemultiplexten Daten zu verbinden.

6. Informationsaufzeichnungsmedium (17), in dem Daten aufgezeichnet sind, wobei die Daten durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten formatiert ist,
wobei die Tabellendaten einen Haupt-Deskriptor mit Deskriptor-Daten aufweisen, der umfasst:
- Sub-Deskriptoren, von denen jeder aus einem Sub-Tag-Wert, der eine Art von Seiteninformation darstellt, die einen Parameter zum Dekodieren der kodierten Daten darstellt, und der Seiteninformation besteht,
- und einem Haupt-Tag-Wert, der einen Satz der Sub-Deskriptoren darstellt, und
- einen Längenwert, der die Länge der Deskriptordaten darstellt, und
**gekennzeichnet dadurch, dass** die Größe der Seiteninformation für jeden Sub-Deskriptor fixiert ist und dass die Sub-Deskriptoren in einer Reihenfolge gespeichert sind, die durch eine vorbestimmte Speicherregel definiert ist, wobei die Regel gemäß der Reihenfolge von folgenden Erweiterungen des Standards ist, auf den sich die Sub-Deskriptoren beziehen.

7. Informationsaufzeichnungsmedium (17) nach Anspruch 6,
wobei Verwaltungsinformation, die mit den paket-gemultiplexten Daten verbunden ist, ferner aufgezeichnet ist, und
in der Verwaltungsinformation Flag-Information gemultiplext ist, die die Speicherregel der Sub-Deskriptoren darstellt.

8. Dekodierer (20), der Daten erhält, die durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten erzeugt wurden, wobei der Dekodierer umfasst:
eine De-Multiplex-Einheit (21), die ausgestaltet ist, die kodierten Daten und die Tabellendaten aus den Paket-gemultiplexten Daten unter Bezug auf die Paket-Identifizierer zu de-multiplexen,
wobei die Tabellendaten einen Haupt-Deskriptor mit Deskriptor-Daten aufweisen, der umfasst:
- Sub-Deskriptoren, von denen jeder aus einem Sub-Tag-Wert, der eine Art von Seiteninformation, die einen Parameter zum Dekodieren der kodierten Daten darstellt, darstellt, und der Seiteninformation besteht, und
- einen Haupt-Tag-Wert, der einen Satz der Sub-Deskriptoren darstellt, und
- einen Längen-Wert, der die Länge der Deskriptor-Daten darstellt, und
eine Informationsanalyseeinheit, die ausgestaltet ist, den Sub-Deskriptor zu analysieren, der von dem Main-Tag-Wert identifiziert wird, der in den ge-de-multiplexten Tabellendaten gespeichert ist, und die Seiteninformation des analysierten Sub-Deskriptors zu extrahieren, und
eine Datendekodiereinheit, die ausgestaltet ist, die kodierten Daten auf Basis der extrahierten Seiteninformation zu dekodieren,
**gekennzeichnet dadurch, dass** die Größe der Seiteninformation für jeden Sub-Deskriptor fixiert ist und dass die Sub-Deskriptoren in einer Reihenfolge dekodiert werden, die durch eine vorbestimmte Regel definiert ist, wobei die Regel gemäß der Reihenfolge von folgenden Erweiterungen des Standards ist, auf den sich die Sub-Deskriptoren beziehen.

9. Dekodierer (20) nach Anspruch 8,
wobei die Informationsanalyseeinheit ausgestaltet ist, die Analyse zu beenden, wenn der Sub-Deskriptor nicht analysiert werden kann.

10. Dekodierer (20) nach Anspruch 8,
wobei die Informationsanalyseeinheit ausgestaltet ist, als einen gleichwertigen Sub-Deskriptor eine Sub-Deskriptor auszuwählen, der aus mehreren Sub-Deskriptoren mit dem gleichen Wert weiter hinten positioniert ist, wenn die mehreren Sub-Deskriptoren aus den Tabellendaten erfasst werden.

11. Multiplexverfahren zum Erzeugen von Daten durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten, wobei das Verfahren die Schritte umfasst:
Erzeugen von Sub-Deskriptoren, von denen jeder aus einem Sub-Tag-Wert, der eine Art von Seiteninformation darstellt, und der Seiteninformation besteht, wobei die Seiteninformation einen Parameter zum Dekodieren der kodierten Daten darstellt,
Erzeugen eines Haupt-Deskriptors, der umfasst:
- Deskriptordaten, die die Sub-Deskriptoren umfassen, die bei dem Erzeugen von Sub-Deskriptoren erzeugt wurden,
- einen Längen-Wert, der die Länge der Deskriptor-Daten darstellt, und
- einen Haupt-Tag-Wert, der einen Satz der Sub-Deskriptoren darstellt, und
Erzeugen der Tabellendaten durch Zuordnen des Haupt-Deskriptors, der bei dem Erzeugen des Haupt-Deskriptors erzeugt wurde, zu dem Paket-Identifizierer der kodierten Daten,
**dadurch gekennzeichnet, dass** die Größe der Seiteninformation für jeden Sub-Deskriptor fixiert ist und dass die Sub-Deskriptoren bei dem Erzeugen der Sub-Deskriptoren in einer Reihenfolge ausgegeben werden, die durch eine vorbestimmte Regel definiert ist, wobei die Regel gemäß der Reihenfolge von folgenden Erweiterungen des Standards ist, auf den sich die Sub-Deskriptoren beziehen.

12. Computerprogramm mit Codemitteln, das ausgestaltet ist, wenn das Computerprogramm auf einem Computer ausgeführt wird, ein Multiplexverfahren zum Erzeugen von Daten durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten auszuführen, wobei das Computerprogramm umfasst:
Codemittel zum Erzeugen von Sub-Deskriptoren, von denen jeder aus einem Sub-Tag-Wert, der eine Art von Seiteninformation darstellt, und der Seiteninformation besteht, wobei die Seiteninformation einen Parameter zum Dekodieren der kodierten Daten darstellt,
Codemittel zum Erzeugen eines Haupt-Deskriptors, der umfasst:
- Deskriptordaten, die die Sub-Deskriptoren umfassen, die bei dem Erzeugen von Sub-Deskriptoren erzeugt wurden,
- einen Längen-Wert, der die Länge der Deskriptor-Daten darstellt, und
- einen Haupt-Tag-Wert, der einen Satz der Sub-Deskriptoren darstellt, und
Codemittel zum Erzeugen der Tabellendaten durch Zuordnen des Haupt-Deskriptors, der bei dem Erzeugen des Haupt-Deskriptors erzeugt wurde, zu dem. Paket-Identifizierer der kodierten Daten,
**dadurch gekennzeichnet, dass** die Größe der Seiteninformation für jeden Sub-Deskriptor fixiert ist und dass die Sub-Deskriptoren bei dem Erzeugen der Sub-Deskriptoren in einer Reihenfolge ausgegeben werden, die durch eine vorbestimmte Regel definiert ist, wobei die Regel gemäß der Reihenfolge von folgenden Erweiterungen des Standards ist, auf den sich die Sub-Deskriptoren beziehen.

13. Dekodierverfahren zum Erhalten von Daten, die durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten erzeugt wurden, wobei das Verfahren die Schritte umfasst:
De-Multiplexen der kodierten Daten und der Tabellendaten aus den Paket-gemultiplexten Daten unter Bezug auf die Paket-Identifizierer,
wobei die Tabellendaten einen Haupt-Deskriptor mit Deskriptor-Daten aufweisen, der umfasst:
- Sub-Deskriptoren, von denen jeder aus einem Sub-Tag-Wert, der eine Art von Seiteninformation, die einen Parameter zum Dekodieren der kodierten Daten darstellt, darstellt, und der Seiteninformation besteht, und
- einen Haupt-Tag-Wert, der einen Satz der Sub-Deskriptoren darstellt, und
- einen Längen-Wert, der die Länge der Deskriptor-Daten darstellt, und
Analysieren des Sub-Deskriptors, der von dem Main-Tag-Wert identifiziert wird, der in den ge-de-multiplexten Tabellendaten gespeichert ist, und Extrahieren der Seiteninformation des analysierten Sub-Deskriptors, und
Dekodieren der kodierten Daten auf Basis der extrahierten Seiteninformation,
**gekennzeichnet dadurch, dass** die Größe der Seiteninformation für jeden Sub-Deskriptor fixiert ist und dass die Sub-Deskriptoren in einer Reihenfolge dekodiert werden, die durch eine vorbestimmte Regel definiert ist, wobei die Regel gemäß der Reihenfolge von folgenden Erweiterungen des Standards ist, auf den sich die Sub-Deskriptoren beziehen.

14. Computerprogramm mit Codemitteln, das ausgestaltet ist, wenn das Computerprogramm auf einem Computer ausgeführt wird, ein Dekodierverfahren zum Erhalten von Daten, die durch Zuordnen von unterschiedlichen Paket-Identifizierern zu (i) kodierten Videodaten oder kodierten Audiodaten und (ii) Tabellendaten hinsichtlich der kodierten Daten und Paket-Multiplexen der kodierten Daten und der Tabellendaten erzeugt wurden, wobei das Computerprogramm umfasst:
Codemittel zum De-Multiplexen der kodierten Daten und der Tabellendaten aus den Paket-gemultiplexten Daten unter Bezug auf die Paket-Identifizierer,
wobei die Tabellendaten einen Haupt-Deskriptor mit Deskriptor-Daten aufweisen, der umfasst:
- Sub-Deskriptoren, von denen jeder aus einem Sub-Tag-Wert, der eine Art von Seiteninformation, die einen Parameter zum Dekodieren der kodierten Daten darstellt, darstellt, und der Seiteninformation besteht, und
- einen Haupt-Tag-Wert, der einen Satz der Sub-Deskriptoren darstellt, und
- einen Längen-Wert, der die Länge der Deskriptor-Daten darstellt, und
Codemittel zum Analysieren des Sub-Deskriptors, der von dem Main-Tag-Wert identifiziert wird, der in den ge-de-multiplexten Tabellendaten gespeichert ist, und Extrahieren der Seiteninformation des analysierten Sub-Deskriptors, und
Codemittel zum Dekodieren der kodierten Daten auf Basis der extrahierten Seiteninformation,
**gekennzeichnet dadurch, dass** die Größe der Seiteninformation für jeden Sub-Deskriptor fixiert ist und dass die Sub-Deskriptoren in einer Reihenfolge dekodiert werden, die durch eine vorbestimmte Regel definiert ist, wobei die Regel gemäß der Reihenfolge von folgenden Erweiterungen des Standards ist, auf den sich die Sub-Deskriptoren beziehen.

## Revendications

1. Multiplexeur (10a, 10b) qui génère d'une donnée en attribuant des identifiants de paquets différents à : (i) l'une d'une donnée vidéo codée et d'une donnée audio codée, et (ii) d'une donnée de tableau concernant la donnée codée, et en multiplexant par paquets la donnée codée et la donnée de tableau, ledit multiplexeur (10a, 10b) comprenant :
une unité (14) de génération de sous-descripteurs pouvant fonctionner pour générer des sous-descripteurs, chacun desquels se compose d'une valeur de sous-balise représentant un type d'informations secondaires, et les informations secondaires, les informations secondaires représentant un paramètre pour décoder la donnée codée ;
une unité (11) de génération de descripteurs principaux pouvant fonctionner pour générer un descripteur principal comprenant :
- une donnée de descripteurs qui comportent les sous-descripteurs générés par ladite unité (14) de génération de sous-descripteurs,
- une valeur de balise principale représentant un ensemble de sous-descripteurs, et
- une valeur de longueur représentant la longueur de la donnée de descripteurs ; et
une unité (12) de génération de tableaux pouvant fonctionner pour générer la donnée de tableau, en associant le descripteur principal généré par ladite unité (11) de génération de descripteurs principaux, à l'identifiant de paquets de la donnée codée,
**caractérisé en ce que** la taille des informations secondaires est fixée pour chaque sous-descripteur et **en ce que** ladite unité (14) de génération de sous-descripteurs peut fonctionner pour délivrer en sortie les sous-descripteurs dans un ordre défini par une règle prédéterminée, ladite règle étant fonction de l'ordre d'extensions ultérieures de la norme à laquelle lesdits sous-descripteurs se rapportent.

2. Multiplexeur (100, 106) selon la revendication 1,
dans lequel ladite règle définit que les sous-descripteurs doivent être délivrés en sortie dans un ordre croissant des valeurs de sous-balise, les valeurs de sous-balise étant des entiers naturels.

3. Multiplexeur (100, 106) selon la revendication 1,
dans lequel ladite règle définit que les sous-descripteurs doivent être classés en groupes selon le moment de normalisation des sous-descripteurs, et un sous-descripteur appartenant à un groupe normalisé antérieur doit être délivré en sortie avant un sous-descripteur appartenant à un groupe normalisé ultérieur.

4. Multiplexeur (100, 106) selon la revendication 1,
dans lequel ladite unité de génération de sous-descripteurs comporte une mémoire interne dans laquelle les sous-descripteurs générés peuvent être stockés, et
l'unité peut fonctionner pour trier les sous-descripteurs devant être délivrés en sortie dans l'ordre défini par ladite règle, lorsque les sous-descripteurs ne sont pas stockés dans l'ordre dans la mémoire interne.

5. Multiplexeur (100, 106) selon la revendication 1, comprenant en outre :
une unité de génération d'informations de gestion pouvant fonctionner pour multiplexer des informations principales pour spécifier ladite règle des informations secondaires, en informations de gestion concernant la donnée multiplexée par paquets ; et
une unité de liaison pouvant fonctionner pour lier les informations de gestion à la donnée multiplexée par paquets.

6. Support (17) d'enregistrement d'informations dans lequel une donnée est enregistrée, la donnée étant formatée en attribuant des identifiants de paquets différents à : (i) l'une d'une donnée vidéo codée et d'une donnée audio codée et (ii) d'une donnée de tableau concernant la donnée codée, et en multiplexant par paquets la donnée codée et la donnée de tableau,
où la donnée de tableau comportent un descripteur principal comprenant une donnée de descripteurs qui comporte :
- des sous-descripteurs, chacun desquels se compose d'une valeur de sous-balise représentant un type desdites informations secondaires représentant un paramètre pour décoder la donnée codée, et les informations secondaires :
- et une valeur de balise principale représentant un ensemble de sous-descripteurs, et
- une valeur de longueur représentant la longueur de la donnée de descripteurs ; et **caractérisée en ce que** la taille des informations secondaires est fixée pour chaque sous-descripteur et **en ce que**
les sous-descripteurs sont stockés dans un ordre défini par une règle de stockage prédéterminée, ladite règle étant fonction de l'ordre d'extensions ultérieures de la norme à laquelle lesdits sous-descripteuxs se rapportent.

7. Support (17) d'enregistrement d'informations selon la revendication 6,
dans lequel des informations de gestion liées à la donnée multiplexée par paquets sont par la suite enregistrées, et
dans les informations de gestion, des informations de drapeau représentant la règle de stockage des sous-descripteurs sont multiplexées.

8. Décodeur (20) qui obtient une donnée qui est générée en attribuant des identifiants de paquets différents à : (i) l'une d'une donnée vidéo codée et d'une donnée audio codée, et (ii) d'une donnée de tableau concernant la donnée codée, et en multiplexant par paquets la donnée codée et la donnée de tableau, ledit décodeur comprenant :
une unité de démultiplexage (21) pouvant fonctionner pour démultiplexer la donnée codée et la donnée de tableau à partir de la donnée multiplexées par paquets, en se référant aux identifiants de paquets ;
où la donnée de tableau comporte un descripteur principal comprenant une donnée de descripteur qui comporte:
- des sous-descripteurs, chacun desquels se compose d'une valeur de sous-balise représentant un type d'informations secondaires représentant un paramètre pour décoder la donnée codée, et les informations secondaires ; et
- une valeur de balise principale représentant un ensemble de sous-descripteurs, et
- une valeur de longueur représentant la longueur de la donnée de descripteur ; et
une unité d'analyse d'informations pouvant fonctionner pour analyser les sous-descripteurs identifiés par la valeur de balise principale stockée dans la donnée de tableau démultiplixée, et pour extraire les informations secondaires du sous-descripteur analysé, et
une unité de décodage de donnée pouvant fonctionner pour décoder la donnée codée sur la base des informations secondaires extraites
**caractérisé en ce que** la taille des informations secondaires est fixée pour chaque sous-descripteur et **en ce que** les sous-descripteurs sont décodés dans un ordre défini par une règle prédéterminée, ladite règle étant fonction de l'ordre d'extensions ultérieures de la norme à laquelle lesdits sous-descripteurs se rapportent.

9. Décodeur (20) selon la revendication 8,
dans lequel ladite unité d'analyse d'informations peut fonctionner pour mettre fin à l'analyse, lorsque le sous-descripteur ne peut pas être analysé.

10. Décodeur (20) selon la revendication 8,
dans lequel ladite unité d'analyse d'informations peut fonctionner pour sélectionner, comme sous-descripteur effectif, un sous-descripteur positionné plus en arrière dans une pluralité de sous-descripteurs ayant la même valeur, lorsque la pluralité de sous-descrxpteurs sont détectés à partir d'une donnée de tableau.

11. Procédé de multiplexage qui consiste à générer d'une donnée en attribuant des identifiants de paquets différents à : (i) l'une d'une donnée vidéo codée et d'une donnée audio codée, et (ii) d'une donnée de tableau concernant la donnée codée et en multiplexant par paquets la donnée codée et la donnée de tableau, ledit procédé comprenant les étapes qui consistent :
à générer des sous-descripteurs, chacun desquels se compose d'une valeur de sous-balise représentant un type d'informations secondaires, et les informations secondaires, les informations secondaires représentant un paramètre pour décoder la donnée codée ;
à générer un descripteur principal comprenant :
- une donnée de descripteur qui comporte les sous-descripteurs générés dans ladite étape de génération des sous-descripteurs,
- une valeur de longueur représentant la longueur de la donnée de descripteur ; et
- une valeur de balise principale représentant un ensemble de sous-descripteurs ; et
à générer la donnée de tableau, en associant le descripteur principal généré dans ladite étape de génération du descripteur principal, à l'identifiant de paquets de la donnée codée,
**caractérisé en ce que** la taille des informations secondaires est fixée pour chaque sous-descripteur et **en ce que**
où dans ladite étape de génération des sous-descripteurs, les sous-descripteurs sont délivrés en sortie dans un ordre défini par une règle prédéterminée, ladite règle étant fonction de l'ordre d'extensions ultérieures de la norme à laquelle lesdits sous-descripteurs se rapportent.

12. Programme informatique comprenant un moyen de code adapté pour exécuter, lorsque ledit programme informatique est exécuté sur un ordinateur :
un procédé de multiplexage qui consiste à générer une donnée en attribuant des identifiants de paquets différents à : (i) l'une d'une donnée vidéo codée et d'une donnée audio codée, et (ii) d'une donnée de tableau concernant la donnée codée, et en multiplexant par paquets la donnée codée et la donnée de tableau, ledit programme informatique comprenant :
un moyen de code destiné à générer des sous-descripteurs, chacun desquels se compose d'une valeur de sous-balise représentant un type d'informations secondaires, et les informations secondaires, les informations secondaires représentant un paramètre pour décoder la donnée codée ;
un moyen de code destiné à générer un descripteur principal comprenant :
- une donnée de descripteur qui inclut les sous-descripteurs générés dans ladite étape de génération de sous-descripteurs,
- une valeur de longueur représentant la longueur de la donnée de descripteur ; et
- une valeur de balise principale représentant un ensemble de sous-descripteurs ; et
un moyen de code destiné à générer la donnée de tableau, en associant le descripteur principal généré dans ladite étape de génération du descripteur principal, à l'identifiant de paquets de la donnée codée,
**caractérisé en ce que** la taille des informations secondaires est fixée pour chaque sous-descripteur et que
où dans ladite étape de génération des sous-descripteurs, les sous-descripteurs sont délivrés en sortie dans un ordre défini par une règle prédéterminée, ladite règle étant fonction de l'ordre d'extensions ultérieures de la norme à laquelle lesdits sous-descripteurs se rapportent.

13. Procédé de décodage qui consiste à obtenir d'une donnée qui sont générées en attribuant des identificateurs de paquets différents à : (i) l'une d'une donnée vidéo codée et d'une donnée audio codée, et (ii) d'une donnée de tableau concernant la donnée codée, et en multiplexant par paquets la donnée codée et la donnée de tableau, ledit procédé comprenant les étapes qui consistent :
à démultiplexer la donnée codée et la donnée de tableau à partir d'une donnée multiplexée par paquets, en se référant aux identifiants de paquets :
où la donnée de tableau comporte un descripteur principal comprenant la donnée de descripteur qui comporte :
- des sous-descripteurs, chacun desquels se compose d'une valeur de sous-balise représentant un type d'informations secondaires représentant un paramètre pour décoder la donnée codée, et les informations secondaires ; et
- une valeur de balise principale représentant un ensemble de sous-descripteurs, et
- une valeur de longueur représentant la longueur de la donnée de descripteur ; et
à analyser le"'sous-descripteur identifié par la valeur de balise principale stockée dans la donnée de tableau démultiplexée, et à extraire des informations secondaires du sous-descripteur analysé, et
à décoder la donnée codée sur la base des informations secondaires extraites, **caractérisé en ce que** la taille des informations secondaires est fixée pour chaque sous-descripteur, et **en ce que** les sous-descripteurs sont décodés dans un ordre défini par une règle prédéterminée, ladite règle étant fonction de l'ordre d'extensions ultérieures de la norme à laquelle lesdits sous-descripteurs se rapportent.

14. Programme informatique comprenant un moyen de code qui, lorsque ledit programme informatique est exécuté sur un ordinateur, est adapté pour mettre en oeuvre
un procédé de décodage qui consiste à obtenir une donnée qui est générée en attribuant des identificateurs de paquets différents à : (i) l'une d'une donnée vidéo codée et d'une donnée audio codée, et (ii) d'une donnée de tableau concernant la donnée codée, et en multiplexant par paquets la donnée codée et la donnée de tableau, ledit programme informatique comprenant :
un moyen de code destiné à démultiplexer la donnée codée et la donnée de tableau à partir d'une donnée de paquets multiplexée, en se référant aux identifiants de paquets ;
où la donnée de tableau comporte un descripteur principal comprenant la donnée de descripteur qui comprend :
- des sous-descripteurs, chacun desquels se compose d'une valeur de sous-balise représentant un type d'informations secondaires représentant un paramètre pour décoder la donnée codée, et des informations secondaires ; et
- une valeur principale de balise représentant un ensemble de sous-descripteurs, et
- une valeur de longueur représentant la longueur de la donnée de descripteur ; et
un moyen de code destiné à analyser les sous-descripteur identifiés par la valeur de balise principale stockée dans la donnée de tableau démultiplexée, et à extraire des informations secondaires du sous-descripteur analysé ; et
un moyen de code destiné à décoder la donnée codée sur la base des informations secondaires extraites, **caractérisé en ce que** la taille des informations secondaires est fixée pour chaque sous-descripteur, et **en ce que** les sous-descripteurs sont décodés dans un ordre défini par une règle prédéterminée, ladite règle étant fonction de l'ordre d'extensions ultérieures de la norme à laquelle lesdits sous-descripteurs se rapportent.
